Europäisches Patentamt

European Patent Office

Office européen des brevets

(19)

(11) **EP 0 598 484 B1**

(12) **EUROPEAN PATENT SPECIFICATION**

(45) Date of publication and mention
of the grant of the patent:
**19.12.2001 Bulletin 2001/51**

(51) Int Cl.⁷: **H04L 12/26**, H04Q 3/00,
H04M 3/22

(21) Application number: **93308124.2**

(22) Date of filing: **12.10.1993**

(54) **Monitoring system status**

Überwachung des Zustandes eines Systems

Surveillance de l'état d'un système

(84) Designated Contracting States:
**CH DE FR GB IT LI SE**

(30) Priority: **22.10.1992 GB 9222282**
**08.04.1993 GB 9307494**

(43) Date of publication of application:
**25.05.1994 Bulletin 1994/21**

(73) Proprietors:
• **Hewlett-Packard Company, A Delaware
Corporation
Palo Alto, CA 94304 (US)**
• **Agilent Technologies, Inc. (a Delaware
corporation)
Palo Alto, CA 94303 (US)**

(72) Inventor: **Phaal, Peter
Bradley Stoke, Bristol BS12 8AW (GB)**

(74) Representative: **Coker, David Graeme et al
Agilent Technologies UK Ltd, Legal Department,
M/S CSCA15, Eskdale Road Winnersh Triangle
Wokingham, Berks RG41 5DZ (GB)**

(56) References cited:
**EP-A- 0 477 448**       **US-A- 4 527 240**

• **ELEKTRONIK, vol.41, no.5, March 1992,
MUNCHEN DE pages 81 - 87, XP293128 HÖING
'Es muss nicht immer ein Protokollanalysator
sein'**
• **ELEKTRONIK, vol.41, no.18, August 1992,
MUNCHEN DE pages 48 - 50, XP310953
KLAPROTH 'Bevor das Netzwerk streikt'**
• **DATA COMMUNICATIONS, vol.21, no.6, April
1992, NEW YORK US pages 43 - 44, XP271117
CARR 'Low-cost network monitor gets the LAN
lowdown'**

**Description**

Technical Field

This invention relates to methods and apparatus for monitoring system status, and particularly, though not exclusively, for monitoring the status of multiple operating parameters of a multiple domain data communication network.

Background Art

The widespread use of computers has led to the creation of networks of various kinds to facilitate the exchange of data between computers and the cost-effective use of sharable resources such as printers and file servers.

One common kind of network is the so-called Local Area Network (LAN), typically used for connecting personal computers and computer workstations to each other and to sharable resources. A LAN often has multiple 'segments', each segment being a section of network which is separated from all other sections by one or more devices (such as bridges or routers) for filtering messages traversing the network. LANs have grown to the extent that some are very complex, comprising tens or hundreds of segments with hundreds or thousands of devices coupled to them.

A segment in the context of a LAN is an example of a notional subdivision of a network the equivalent of which in the context of other kinds of network may be referred to as a 'domain'. National and international telecommunications transmission networks for carrying voice and data signals are increasingly being designed around the use of computers. In particular, a second, computerized, signalling network is frequently provided in parallel with, and for controlling switching and other operation of, the transmission network carrying voice and data traffic. This signalling network may operate in accordance with, for example, an agreed standard commonly known as Signalling System No. 7 (SS7). An entire SS7 network may have many thousands of signalling points interconnected by a large number of signalling links. Such a network is typically treated as comprising several sub-divisions known as domains. A domain may be any subset of the overall network which it is convenient to identify as a distinct entity for commercial or operational reasons.

The term domain is used herein to refer to any convenient sub-division of a network, such as a segment in a LAN or a domain in an SS7 network.

Large networks present formidable problems of management and maintenance. A fault in one device on the network can cause undesirable effects over extensive portions of the network, without the identity of the source of the problems being immediately evident.

With a view to assisting fault-finding and repair, various measurements are typically made of a variety of operating parameters of each domain of a network, such as (in the case of a LAN) cyclic-redundancy check (CRC) errors, data frame or packet communication rates and utilization. However, on a large network the sheer quantity of such measurements is a significant hindrance to their effective use in fault-location. There may be several hundred such measurements in total, of which just one may be the key to the true cause of a problem. None of the other measurements will necessarily provide any indication of the identity of that key measurement. Thus successful identification of the key measurement is entirely haphazard, relying on chance or an exhaustive and time-consuming review of every available measurement. Furthermore, there has previously been no effective way of presenting a summary of such measurements which can alert a network manager to a condition which may be indicative of a fault and which warrants investigation.

It is an object of this invention to provide a method and apparatus for monitoring the status of systems in which many measurements are made of multiple parameters (and of which a multiple domain data communication network is one example), which at least alleviate these problems.

A technique has been proposed in US Patent 4 527 240, for the unrelated field of blood chemistry evaluation, in which the values of various measured parameters of only one blood sample are plotted on respective radial axes on a circular coordinate arrangement. However, this proposal relates to a completely different technical field from the present invention, and moreover does not even address the problem of identification of a key measurement among a very large population of measurements obtained from a multiplicity of sources.

EP 0 477 448 describes a device and system for monitoring activity on a network carrying message packets, in which only randomly selected packets are processed for monitoring purposes. Processing of the selected packets yields values for various parameters, including packet and (CRC) error rates and numbers of incorrectly-sized packets. In an article entitled "Es muß nicht immer ein Protokollanalysator sein" ("A protocol-analyzer is not always required"), by Dipl.-Ing. Klaus Höing, Elektronik, vol. 41, no. 5, pp. 81-87, the capabilities of protocol analysers and LAN packet monitors for problem diagnosis in local area networks are compared. The article also describes the possibilities for user control of the equipment, for example to filter packets and to select options for the display of network traffic parameters for different sections of a monitored network.

Disclosure of Invention

According to one aspect of this invention there is provided a method of monitoring multiple measurements of each of multiple parameters related to the operational status of a multiple domain data communication network, comprising the steps of:

> acquiring, for each respective one of multiple domains of said network, a respective measurement of each of said parameters; and
> plotting values derived from said measurements on respective ones of a multiplicity of axes, each said axis corresponding to a respective said parameter,

and characterised by

> for each parameter, applying a scaling function to each measurement of that parameter to derive a scaled value thereof as a function of predetermined threshold values for that parameter, said scaled values being within a predetermined range common to all said parameters;
> for each parameter, selecting an extreme one of said scaled values; and
> plotting said selected scaled value on the respective one of said multiplicity of axes.

According to another aspect of this invention there is provided apparatus for monitoring multiple measurements of each of multipleparameters related to the operational status of a multiple domain data communication network, comprising:

> means for receiving a respective measurement of each of said parameters for each respective one of multiple domains of said network; and
> means for plotting values derived from said measurements on respective ones of a multiplicity of axes, each said axis corresponding to a respective said parameter,

and characterised by

> means for applying, for each parameter, a scaling function to each measurement of that parameter to derive a scaled value thereof as a function of predetermined threshold values for that parameter, said scaled values being within a predetermined range common to all said parameters; and
> means for selecting, for each parameter, an extreme one of said scaled values; said plotting means being arranged to plot said selected scaled value on the respective one of said multiplicity of axes.

Brief Description of Drawings

A method and apparatus for monitoring system status in accordance with this invention will now described, by way of example, with reference to the accompanying drawings, in which:

| | |
|---|---|
| Figure 1 | is a schematic view of a system comprising a LAN having multiple domains or segments; |
| Figures 2*a* to 2*d* | comprise a flow chart showing steps involved in the method; |
| Figure 3 | is a flow chart showing a step in the chart of Figure 2*b* in more detail; |
| Figure 4 | is a graph illustrating a scaling function used in the method and implemented by the procedure shown in Figure 3; |
| Figure 5 | is an illustration of a spider diagram; |
| Figure 6 | is an illustration of a horizontal bar chart; and |
| Figure 7 | is an illustration of a multi-parameter time series chart. |

Best Mode for Carrying Out the Invention, & Industrial Applicability

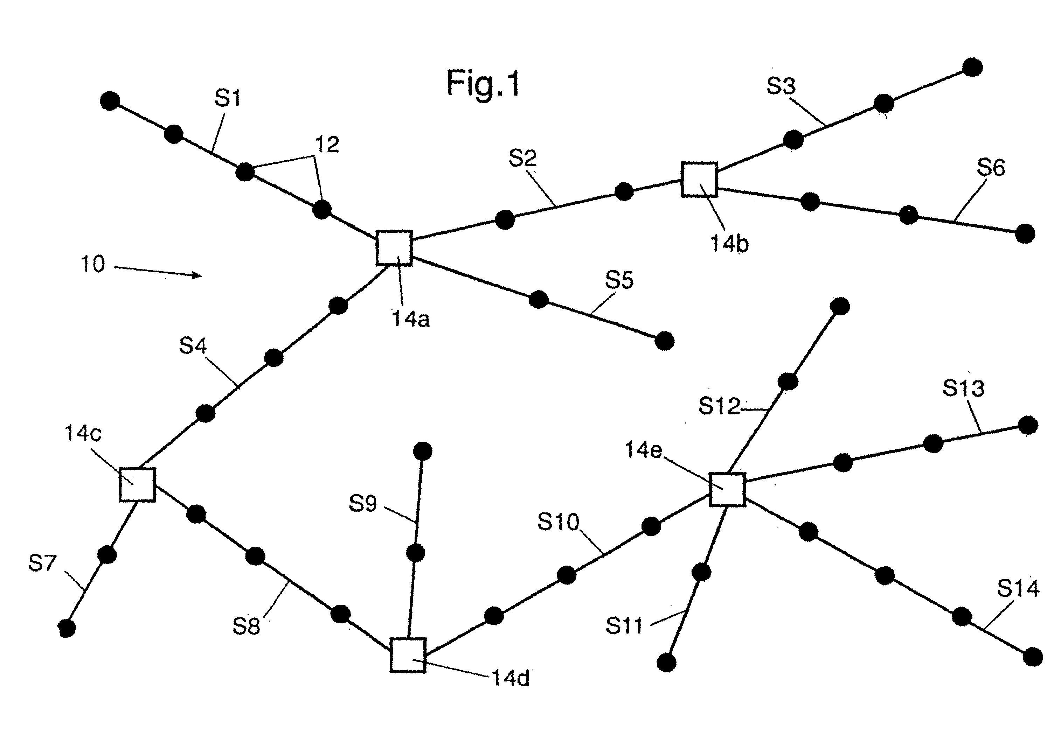

Referring to Figure 1, a data communication network 10 comprises a LAN having multiple domains in the form of segments S (in this example fourteen segments S1 to S14). Each segment has a plurality of nodes 12 connected to it; a node may be, for example, a personal computer, a workstation, a multi-user computer (such as a minicomputer or a mainframe computer), a printer or a file server (disc store). A LAN segment is considered to be a section of the network 10 in which every node connected to that section receives every message transmitted by any other node connected to that section. Such segments are connected together by bridges and routers 14*a* to 14*e* which transfer messages selectively between segments in accordance with their intended destinations; bridges generally involve services of only the physical and data link layers of the seven-layer OSI model of network operation, whereas routers also invoke services in the network layer to provide choices on precise routes that messages take through the network. The network 10 may be implemented using any of a variety of known network technologies, such as the IEEE 802.3 standard (also known as Ethernet) or token ring.

A system such as a data communication network involves relatively expensive installation of cabling or optical fibre and of associated equipment, and typically becomes a fundamental part of the service infrastructure of an organization using the network. Accordingly, it is essential for the network to be managed and maintained in a manner which is both cost-effective and ensures a high degree of reliability and availability. To this end, it is usual to incorporate into a network facilities for monitoring and managing its operation and the use of its resources.

In particular, a variety of operating parameters are measured on a repetitive basis and made available to network managers for scrutiny. These parameters typically include:

> the extent of utilization of the available network capacity;
> the rate of transfer of data frames;
> the rate of occurrence of CRC errors;
> the rate of occurrence of alignment errors (i.e. frames with incomplete bytes);
> the rate of generation of multicast messages;
> the rate of generation of broadcast messages.

Some of these parameters may be measured directly, while others may be calculated from more fundamental values such as counts of transmitted frames, byte counts and CRC error counts. Such measurements can be used to detect the presence of faults in the network 10, and to identify where in the network a fault is located. For this purpose the measurements are normally made for each network segment individually.

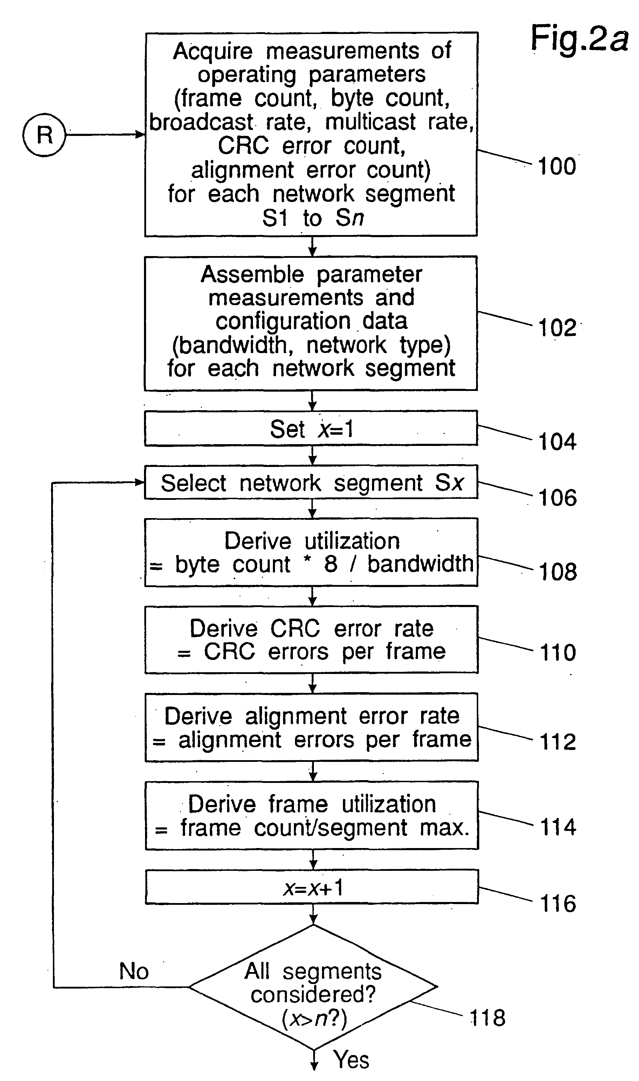

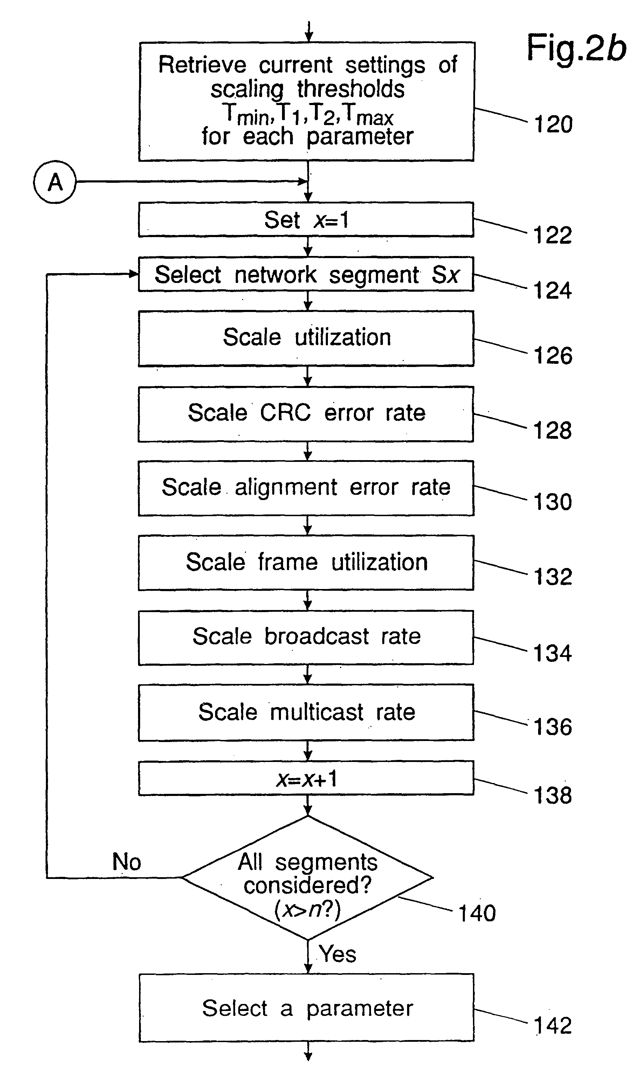

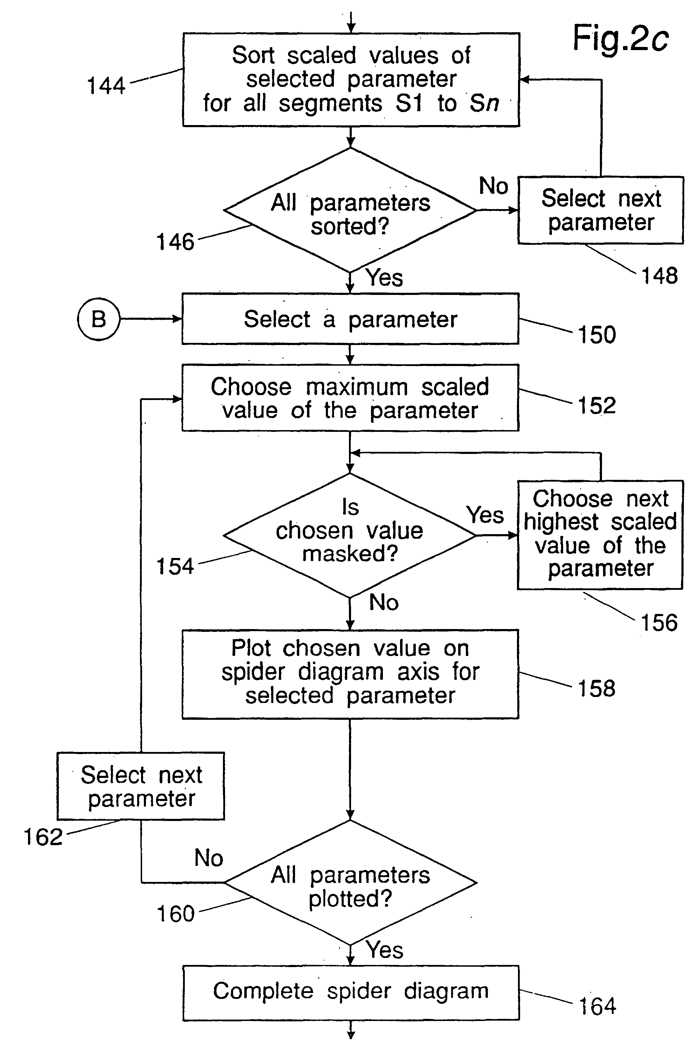

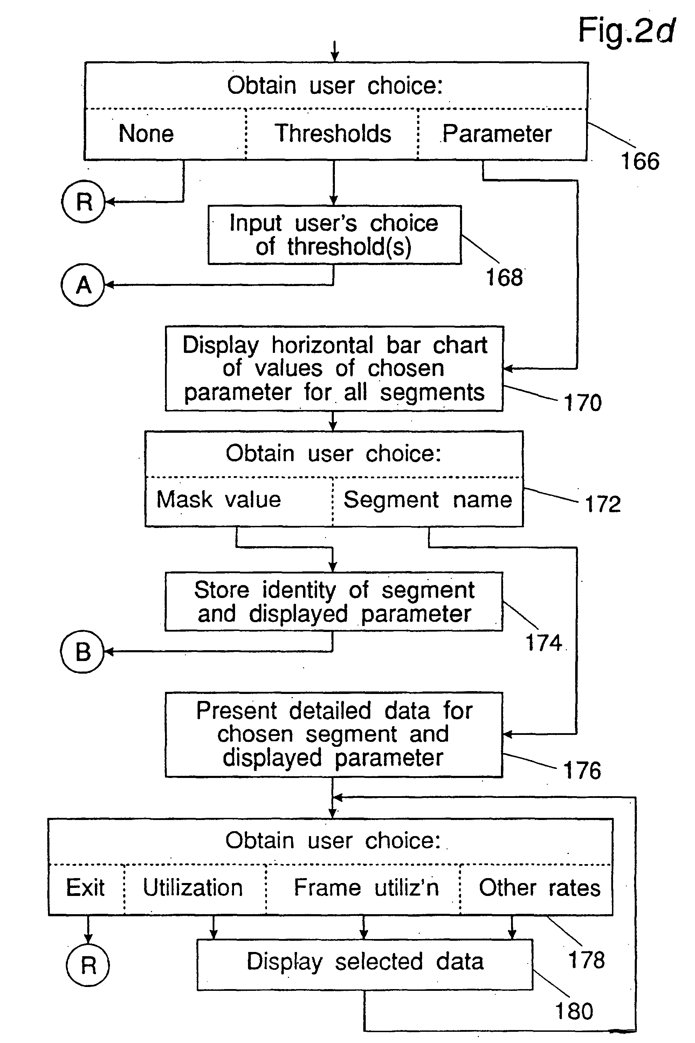

Although these measurements are potentially very useful, their utility can be seriously diminished by their sheer volume in the case of large networks. Some networks have several hundreds or thousands of segments. Measurement of six or more parameters for each segment results in a total of many hundred measured values, only one or two of which may be of direct use in tracking down a particular fault. However, it is very difficult or impossible for a human user to review such a large quantity of data and select the relevant values - the task is analogous to locating the proverbial 'needle in a haystack'. The procedure set out in Figures 2*a* to 2*d* provides a machine-implemented approach for analysing this mass of data about the system prior to inspection by the user, in order to alleviate this problem.

This procedure may be implemented with equipment comprising either purpose-designed hardware or an appropriately-programmed general-purpose computer, as convenient. Certain steps in the procedure involve interaction with a user of the equipment; for this purpose the equipment will typically include a display device such as a visual display unit and an input device such as a keyboard and/or a pointing device (sometimes known as a mouse). The general principles of such devices and the manner in which they may be used to enable interaction when required between the equipment and its user are well known to those skilled in the relevant art and will therefore not be described here.

Referring to Figure 2*a*, the first step 100 of the procedure consists of acquiring measurements of operating parameters and values of interest, such as:

> count of data frames transmitted;
> count of data bytes transmitted;
> count of CRC errors;
> count of alignment errors;
> the rate of generation of multicast messages;
> the rate of generation of broadcast messages.

To allow temporal changes in network operation to be followed, these measurements may relate to the number of events occurring in a unit time interval; thus, for example, the number of frames transmitted in each successive minute may be divided by sixty, to provide a count of frames per second averaged over a one minute interval. The measurements are acquired for each of the segments S1 to S*n* (where *n* is the total number of segments in the network, and in the example of Figure 1 has a value of 14). Any convenient method known to those skilled in the art may be used for this purpose; thus, for example, the technique based on random sampling of message frames or packets as described in European patent application No. 0 477 448 may be used. However, the particular methods used for acquiring measurements of each of the desired parameters and values form no part of the present invention, and accordingly will not be described in detail herein.

At step 102, these measured data are assembled together, along with data relating to the configuration of the network 10. The configuration data include such information as the overall data transfer bandwidth of each segment S and the type of technology (such as Ethernet or token ring) on which each segment is based. In the case of a program implementation, the data may be conveniently organized into a tabular data structure with each row relating to a respective one of the segments S1 to S$n$, and each column relating to a respective one of the measured and configuration data.

In the following step 104 a counter x is initialized to a value of unity, and is then used at step 106 to identify the segment, in the first instance S1, to be considered in the following group of steps 108 to 114; equivalently the counter $x$ indicates the relevant row of a tabular data structure assembled as described at step 102.

At step 108 the overall utilization for the segment under consideration is calculated from the measured byte count during the unit time interval and the bandwidth (in bits per second) of that segment, in accordance with the relationship:

$$\text{utilization} = \text{byte count} * 8 / \text{bandwidth} \qquad (1)$$

At step 110 the CRC error rate is derived as a function of the number of CRC errors per frame of data transmitted; likewise at step 112 the alignment error rate is obtained as a function of the number of alignment errors per frame of data transmitted. At step 114 the frame utilization (that is the proportion of potential frame capacity actually used) is calculated from the actual frame count during the unit time interval and the maximum possible frame count for the type of network technology used in the segment under consideration, in accordance with the relationship:

$$\text{frame utilization} = \text{frame count} / \text{segment maximum} \qquad (2)$$

These calculated parameters, together with the directly measured multicast and broadcast message rates, provide, in this example, a total of six parameters for use in subsequent stages of the procedure.

The counter $x$ is incremented by one at step 116, and its value compared with the value of $n$ at decision step 118. If $x$ is not greater than $n$, the calculations in steps 108 to 114 need to be repeated for one or more other network segments S. Accordingly the procedure returns from the decision step 118 to step 106 to identify the next segment and perform those calculations. If $x$ is greater than $n$, these calculations have been completed for all network segments and the procedure continues to the next step 120 (Figure 2$b$).

The values of four threshold settings $T_{min}$, $T_1$, $T_2$ and $T_{max}$ (defined as explained below) are retrieved at step 120 for each of the six parameters (utilization, CRC error rate, alignment error rate, frame utilization, broadcast rate and multicast rate). The counter $x$ is then initialized to a value of unity again at step 122 and used at step 124 to identify the segment to be considered in the following group of steps 126 to 136.

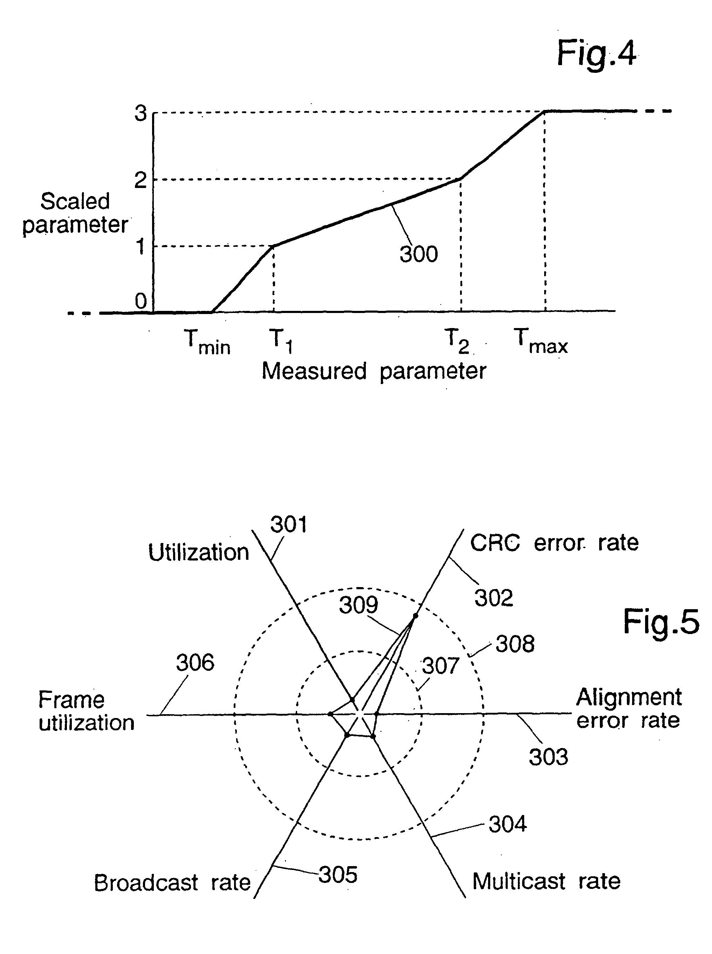

At step 126 the utilization value for the segment currently under consideration is scaled to have a value between 0 and 3, in accordance with a piecewise linear scaling function defined by the thresholds $T_{min}$, $T_1$, $T_2$ and $T_{max}$ for utilization. The general form of this scaling function is illustrated at 300 in Figure 4. Thus, any value for utilization below $T_{min}$ is transformed to a scaled value of 0; any value between $T_{min}$ and $T_1$ is transformed to a scaled value between 0 and 1, in proportion to its value relative to $T_{min}$ and $T_1$; likewise, any value between T, and $T_2$ is transformed to a scaled value between 1 and 2, in proportion to its value relative to $T_1$ and $T_2$; any value between $T_2$ and $T_{max}$ is transformed to a scaled value between 2 and 3, in proportion to its value relative to $T_2$ and $T_{max}$; and any value above $T_{max}$ is transformed to a scaled value of 3.

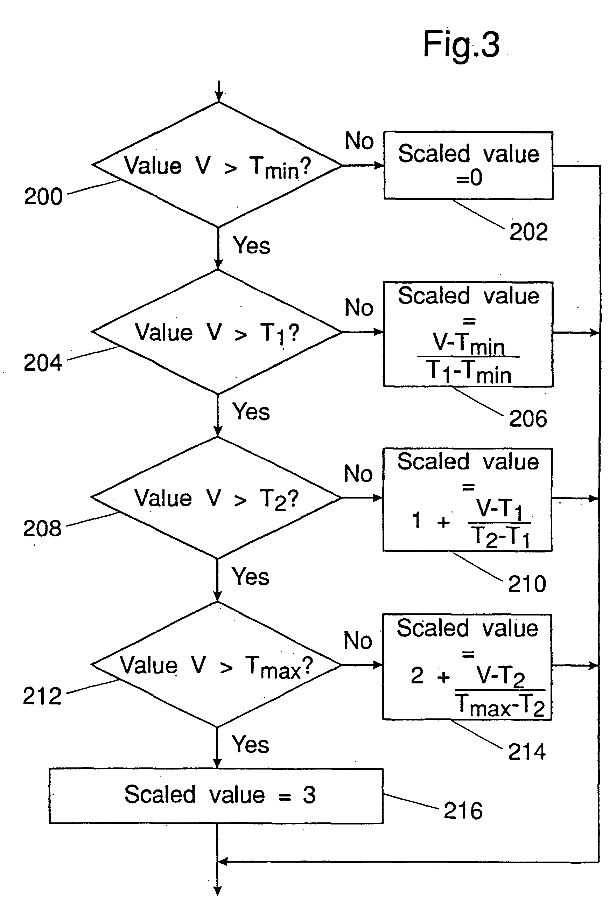

Figure 3 shows in more detail steps that are performed to implement this scaling. Thus at step 200 the value V of the utilization parameter is compared with the value of $T_{min}$; if V is not greater than $T_{min}$ the scaled value is set to 0, at step 202. Otherwise the value V is compared, at step 204, with the value of $T_1$; if V is no greater than $T_1$ the scaled value is determined at step 206 in accordance with the relationship

$$(V - T_{min})/(T_1 - T_{min}) \qquad (3)$$

If V is greater than $T_1$, it is compared at step 208 with $T_2$, and, if less than or equal to $T_2$, the scaled value is calculated at step 210 from the relationship

$$1 + (V - T_1)/(T_2 - T_1) \tag{4}$$

If necessary a final comparison is made at step 212 with $T_{max}$; if V is no greater then the scaled value is derived at step 214 in accordance with

$$2 + (V - T_2)/(T_{max} - T_2) \tag{5}$$

Otherwise the scaled value is set to 3 at step 216.

Referring again to Figure 2b, scaling is applied in the same way at step 128 to the CRC error rate for the segment currently under consideration, in accordance with the values of the thresholds $T_{min}$, $T_1$, $T_2$ and $T_{max}$ applicable to CRC error rate. At steps 130 to 136 respectively, the values of alignment error rate, frame utilization, broadcast rate and multicast rate for the current segment are scaled in like manner, in accordance with the values of the thresholds $T_{min}$, $T_1$, $T_2$ and $T_{max}$ applicable to each of those parameters. Although the general nature of the scaling operation is similar for each parameter, it will be understood that the precise form of the scaling function as illustrated in Figure 3 will vary from parameter to parameter, in dependence upon the values of the four thresholds for each parameter.

The counter $x$ is incremented by one at step 138, and its value compared with the value of $n$ at decision step 140. If $x$ is not greater than $n$, the scaling operations in steps 126 to 136 need to be repeated for one or more other network segments S. Accordingly the procedure returns from the decision step 140 to step 124 to identify the next segment and perform those operations. If $x$ is greater than $n$, these operations have been completed for all network segments and the procedure continues to the next step 142.

At step 142 one of the parameters (for example, utilization) is selected, and then at step 144 (Figure 2c) all the scaled values of that parameter for the various segments S1 to S$n$ are sorted by value, but in such a manner that the identity of each value in terms of the network segment to which it relates is preserved. A test is performed at decision step 146 to establish whether this sorting procedure has been carried out for all of the six parameters; if not the procedure selects the next parameter at step 148 and then returns to step 146 to sort the scaled values of that newly selected parameter.

When sorting has been completed for all parameters, the procedure advances to step 150, where one of the parameters is again selected. At step 152 the maximum scaled value for the selected parameter is chosen, and its identity is tested at decision step 154 to establish whether the selected parameter for the network segment to which the chosen value relates has been previously denoted by the user (as explained below) to be 'masked', that is excluded from normal display of network status. Such masking may be desirable in circumstances where a known condition exists in the network and the user wishes temporarily to suppress indication of this condition to allow any other, possibly lesser but nonetheless significant conditions to become evident. The user's choices in this respect can be stored, for example, in a look-up table indexed by parameter and segment.

If the chosen maximum scaled value does relate to a segment for which the selected parameter is currently masked, then the next highest scaled value of the selected parameter is chosen at step 156, and the test at step 154 is repeated. This cycle continues until the highest unmasked value has been chosen.

The procedure then continues to step 158, at which the chosen scaled value (between 0 and 3) is plotted on an axis of a multiple-axis spider diagram, displayed for example on a visual display unit. As illustrated in Figure 5, the spider diagram has, in this example, six equi-angularly spaced axes 301 to 306, one for each of the six parameters (utilization, CRC error rate, alignment error rate, frame utilization, broadcast rate and multicast rate). The chosen scaled value is plotted on the respective axis for the current selected parameter, at a point along it representing its value on the scale of 0 (at the centre) to 3 (at the periphery). To improve clarity the zero point on each axis is spaced slightly outwards from the geometric centre of the diagram.

A test is performed at decision step 160 to establish whether this procedure for choosing and plotting the maximum unmasked value has been carried out for all of the six parameters; if not the procedure selects the next parameter at step 162 and then returns to step 152 to choose and plot the scaled value of that newly selected parameter.

After values have been plotted for all six parameters, the procedure continues to step 164, where plotting of the spider diagram is completed. This may involve, for example and as shown in Figure 5, labelling of each axis 301 to 306 of the diagram to indicate the associated parameter, adding circles 307 and 308 with radii of 1 and 2 units respectively on the same scale as for the plotting of the parameter scaled values, and connecting the point plotted on each axis to the points on the adjacent lines with straight lines to produce a polygonal figure 309. If desired, the interior of this polygon 309 may be coloured in accordance with the plotted values; thus the colour may be green if all values are no greater than 1 (indicating for example that these values are acceptable), yellow if any value is between 1 and 2 (that is marginal), and red if any value is greater than 2 (severe condition needing attention).

In the particular example illustrated in Figure 5 it is immediately evident that most of the parameters have values which are relatively low (and therefore, depending on the chosen threshold settings, probably acceptable). However, there is at least one CRC error rate which is significantly higher relative to its thresholds than are the other parameters; in particular it exceeds threshold $T_1$, probably set at a level indicating a potential problem, and it is therefore likely to warrant further investigation.

At the following step 166 (Figure 2*d*) the user is provided with three choices: take no action; alter the scaling threshold settings $T_{min}$, $T_1$, $T_2$ and $T_{max}$ for one or more of the displayed parameters; or select a parameter for more detailed analysis. If the user takes no action, for example within a preset timeout period, the procedure automatically returns via entry point R to step 100 (Fig.2*a*), to acquire a set of measurements for a new unit time interval and update the spider diagram accordingly, thereby maintaining an indication of the current overall network status. Previous sets of measurements are retained for possible detailed review, as described below, in the event that a problem is subsequently encountered.

If the user chooses to alter the threshold settings, the procedure moves to step 168, where the user is enabled to specify values for these threshold settings for each of the parameters (for example by entering values via a keyboard or by interaction with a graphical display using a pointing device). When the settings have been specified, the procedure returns via entry point A (Figure 2*b*) to step 122, to derive new scaled values in accordance with the new threshold setting(s) and provide a correspondingly updated spider diagram.

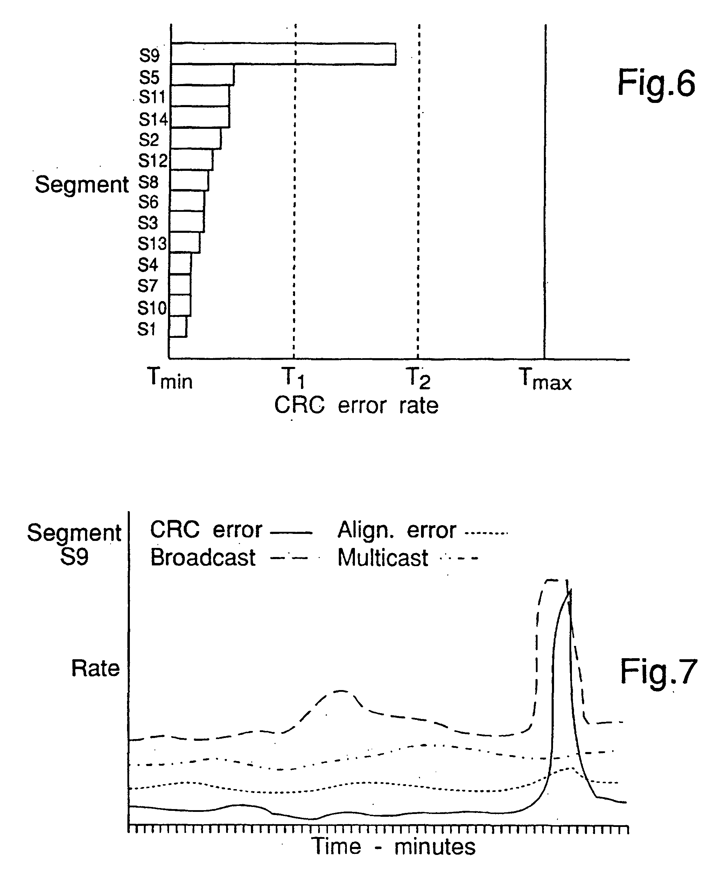

If the user selects one of the displayed parameters (for example by selecting, with a pointing device, the name of that parameter on the spider diagram), the procedure advances to step 170. Here a horizontal bar chart is provided, with the general form illustrated in Figure 6, of the scaled values of the selected parameter for some or all of the network segments S. The values are conveniently displayed in descending order, with the largest value at the top of the This facilitates identification by the user of segment(s) which may have a notably high value for that parameter, and facilitates comparison between segments. Thus, in the example shown in Figure 6, it is clear that segment S9 has a much higher CRC error rate than the other segments of the network 10; furthermore, this error rate is above the threshold $T_1$ which has been established by the user.

The procedure now offers the user two further choices (step 172): to 'mask' the value of the current selected parameter for a chosen segment during generation of the spider diagram, or to select a particular segment for further analysis. If the user selects the mask option, the identity of each segment whose parameter value for the current parameter is to be masked is requested from the user and then stored at step 174, for example in a look-up table indexed by parameter and segment as described above. The procedure then returns via entry point B (Figure 2*c*) to step 150, to select maximum scaled values for each parameter which are not masked and provide a correspondingly updated spider diagram.

If the user selects a particular segment for further analysis, (for example by selecting with a pointing device the name of that segment on the bar chart), the procedure advances to step 176. At this step detailed data on the recent operational history of that segment are presented to the user, for example in the form of time series of value of various measured operating parameters relating to that segment. These parameters may include those originally measured or derived in order to prepare the spider diagram of Figure 5, and may also include other measured or derived parameters which are typically recorded on a continuing basis for network management purposes, as described for example in European patent application No. 0 477 448. Thus, as indicated at step 178, the user may obtain:

a display of utilization, in terms of the 'top talkers' (the pairs of stations exchanging the most bytes of data) on the segment on a minute-by-minute basis;
a display of frame utilization, in terms of the 'top talkers' exchanging the most frames of data on the segment on a minute-by-minute basis;
a display of CRC error rate, alignment error rate, broadcast rate and multicast rate on the segment on a minute-by-minute basis (with the general form shown in Figure 7).

Whichever display is selected at step 178 is then provided at step 180, after which the procedure returns to step 178 to select other displays as required. As shown in Figure 2*d*, the user may also exit these display options when desired, whereupon the procedure returns via entry point R to step 100 to acquire a new set of measurements and update the spider diagram.

Thus the procedure shown and described above alerts the user in an effective manner to potential problems affecting operation of the network 10, and enables the user to isolate quickly and effectively, from amongst the enormous number of parameter measurements available, those few measurements which will facilitate identification and rectification of the problem. In the example shown in Figure 7, it is clear that the CRC error rate rises significantly at the same time as the broadcast rate, suggesting a correlation between these two events.

Although the embodiment illustrated in Figures 2 and 3 has been described in terms of a single-process procedural model for the sake of simplicity and clarity, it will be understood that the invention may also be implemented using multi-process event-driven techniques. Thus, for example, the process of acquiring measurements (step 100) may be arranged to continue concurrently with steps permitting the user to choose new thresholds or values to be masked (steps 168 and 174), the effects of such choices then being applied to whichever set of measurements are next used in updating the spider diagram.

The above description relates in particular to a network in the form of a LAN, and therefore having domains in the form of segments. However, the invention may be applied to other kinds of networks, such as SS7 signalling networks, and to other kinds of systems. In the case of an SS7 network, a domain may comprise, for example, a pair of signalling transfer points (STPs) and/or the signalling points (SPs) connected to a pair of STPs, or the signalling control points (SCPs) in a particular operator's network. Measurements may be made at step 100 of Figure 2*a* of, for example, the following parameters for each domain

for each sender/receiver pair, the number of Initial Address Messages (IAMs);
for each sender/receiver pair, the number of call releases for each type of failure cause indicator;
the number of octets (bytes) of each different type on a link.

For each domain in turn these measurements are then modified and combined, if necessary, and the results scaled, in a manner analogous to that described with reference to steps 104 to 140 of Figures 2*a* and 2*b*. The scaled values of one parameter are sorted and an extreme value selected and plotted, as in steps 142 to 164, and these steps are repeated for each of the remaining parameters.

In the case of an SS7 network it may be desirable to provide multiple spider diagrams simultaneously, each diagram being constructed as described above and displaying a different, respective combination of selected parameter values. Thus, for example, one spider diagram may display call-related measurements (e.g. call setup attempts at a particular point code) and another may display loads on the signalling links and on various types of signalling points in a domain.

It may also be useful to select for display an extreme value of each parameter based not only on a set of thresholds which the parameter may rise above, as shown in Figure 4, but also on additional thresholds which the parameter may fall below. Thus, for example, a parameter such as STP load may have a normal range of values within which it is expected to lie, so that values either side of this range justify being brought to the attention of a user. Accordingly thresholds in addition to $T_{min}$, $T_1$, $T_2$ and $T_{max}$ are defined, and the procedure in Figure 3 is extended to include tests for the value V being less than any of these additional thresholds. If any such test is satisfied by a value of the parameter for a particular domain, that parameter value is selected for inclusion in the spider chart.

## Claims

1. A method of monitoring multiple measurements of each of multiple parameters related to the operational status of a multiple domain data communication network (10), comprising the steps of:

   acquiring, for each respective one of multiple domains (S1...S14) of said network, a respective measurement of each of said parameters; and
   plotting values derived from said measurements on respective ones of a multiplicity of axes (301-306), each said axis corresponding to a respective said parameter,

   and **characterised by**

   for each parameter, applying a scaling function (300) to each measurement of that parameter to derive a scaled value thereof as a function of predetermined threshold values ($T_{min}$, $T_1$, $T_2$, $T_{max}$) for that parameter, said scaled values being within a predetermined range common to all said parameters;
   for each parameter, selecting an extreme one of said scaled values; and
   plotting said selected scaled value on the respective one of said multiplicity of axes (301-306).

2. A method according to claim 1, wherein said axes (301-306) extend radially from a common point.

3. A method according to claim 1 or claim 2, wherein said parameters comprise at least a multiplicity selected from CRC error rate, alignment error rate, network utilization, frame utilization, broadcast rate and multicast rate.

4. A method according to claim 1, wherein said domains (S1...S14) comprise segments of a local area computer communications network (10).

**5.** A method according to claim 1, wherein said parameters comprise call-related measurements in a telecommunications signalling network.

**6.** A method according to claim 1 or claim 5, wherein said parameters comprise loads on signalling links and/or signalling points in a telecommunications signalling network.

**7.** A method according to claim 6, wherein call-related measurements are plotted on a first multiplicity of axes, and loads on signalling links and/or signalling points are contemporaneously plotted on a second multiplicity of axes.

**8.** A method according to any one of the preceding claims, wherein said scaling function (300) is piecewise linear between said threshold values ($T_{min}$, $T_1$, $T_2$, $T_{max}$).

**9.** A method according to any one of the preceding claims, wherein said scaling function (300) has an upper threshold value ($T_{max}$), a lower threshold value ($T_{min}$) and at least one intermediate threshold value ($T_1$, $T_2$).

**10.** A method according to claim 9, wherein said scaling function (300) has four threshold values ($T_{min}$, $T_1$, $T_2$, $T_{max}$).

**11.** A method according to any one of the preceding claims, including the step of excluding at least one measurement of a parameter from said selection of an extreme value of that parameter, in response to operator identification of said measurement.

**12.** A method according to any one of the preceding claims, wherein said threshold values ($T_{min}$, $T_1$, $T_2$, $T_{max}$) are adjustable under operator control.

**13.** A method according to any one of the preceding claims, including the step of providing a display pf respective values of a selected one of said parameters for a plurality of respective domains (S1...S14) of said network in response to operator selection of that parameter.

**14.** A method according to claim 13, including the step of providing a display of multiple measurements of a parameter for a domain of said network in response to operator selection of said domain.

**15.** A method according to any one of the preceding claims, including the step of connecting each value plotted on a respective said axis to its neighbouring plotted values to define a polygonal figure (309).

**16.** Apparatus for monitoring multiple measurements of each of multiple parameters related to the operational status of a multiple domain data communication network (10), comprising:

    means for receiving a respective measurement of each of said parameters for each respective one of multiple domains (S1...S14) of said network; and
    means for plotting values derived from said measurements on respective ones of a multiplicity of axes (301-306), each said axis corresponding to a respective said parameter,

and **characterised by**

    means for applying, for each parameter, a scaling function (300) to each measurement of that parameter to derive a scaled value thereof as a function of predetermined threshold values ($T_{min}$, $T_1$, $T_2$, $T_{max}$) for that parameter, said scaled values being within a predetermined range common to all said parameters; and
    means for selecting, for each parameter, an extreme one of said scaled values;
    said plotting means being arranged to plot said selected scaled value on the respective one of said multiplicity of axes (301-306).

**17.** Apparatus according to claim 16, wherein said axes (301-306) extend radially from a common point.

**18.** A method according to claim 1, including the steps of:

    indicating for each axis at least one threshold value (307,308), thereby indicating if the plotted selected scaled value exceeds said threshold; and
    altering a display feature (309) associated with said axes (301-306) to indicate that a threshold has been exceeded by at least one said selected scaled value.

**19.** A method according to claim 18, wherein the display feature comprises a property, such as the fill colour, of a polygonal figure (309) defined by connecting each value plotted on a respective said axis to its neighbouring plotted values.

## Patentansprüche

**1.** Ein Verfahren zum Überwachen mehrerer Messungen jedes von mehreren Parametern, die sich auf den Betriebszustand eines Mehrdomänen-Datenkommunikations-Netzwerks (10) beziehen, das folgende Schritte aufweist:

Erfassen, für jede einzelne von mehreren Domänen (S1...S14) des Netzwerks, eine jeweilige Messung jedes der Parameter; und

Auftragen von Werten, die aus diesen Messungen abgeleitet sind, auf jeweiligen einer Vielzahl von Achsen (301 - 306), wobei jede Achse einem jeweiligen Parameter entspricht, und **gekennzeichnet durch**

für jeden Parameter, Anwenden einer Skalierfunktion (300) auf jede Messung dieses Parameters, um einen skalierten Wert desselben als eine Funktion von vorbestimmten Schwellwerten ($T_{min}$, $T_1$, $T_2$ und $T_{max}$) für diesen Parameter abzuleiten, wobei die skalierten Werte innerhalb eines vorbestimmten Bereichs liegen, der allen Parametern gemeinsam ist;

für jeden Parameter, Auswählen eines extremen der skalierten Werte; und

Auftragen des ausgewählten skalierten Wertes auf der jeweiligen der Vielzahl von Achsen (301 - 306).

**2.** Ein Verfahren gemäß Anspruch 1, bei dem sich die Achsen (301 - 306) radial von einem gemeinsamen Punkt erstrecken.

**3.** Ein Verfahren gemäß Anspruch 1 oder 2, bei dem die Parameter mindestens eine Vielzahl aufweisen, die aus der CRC-Fehlerrate, Justierfehlerrate, Netzwerknutzung, Rahmennutzung, Rundsenderate und Sammelsenderate ausgewählt ist.

**4.** Ein Verfahren gemäß Anspruch 1, bei dem die Domänen (S1...S14) Segmente eines lokalen Computerkommunikationsnetzwerks (10) aufweisen.

**5.** Ein Verfahren gemäß Anspruch 1, bei dem die Parameter rufverbindungsbezogene Messungen in einem Telekommunikations-Zeichengabenetzwerk aufweisen.

**6.** Ein Verfahren gemäß Anspruch 1 oder 5, bei dem die Parameter Lasten auf Zeichengabeverbindungen und/oder Zeichengabestellen in einem Telekommunikations-Zeichengabenetzwerk aufweisen.

**7.** Ein Verfahren gemäß Anspruch 6, bei dem rufverbindungsbezogene Messungen auf einer ersten Vielzahl von Achsen aufgetragen werden, und Lasten auf Zeichengabeverbindungen und/oder Zeichengabestellen gleichzeitig auf einer zweiten Vielzahl von Achsen aufgetragen werden.

**8.** Ein Verfahren gemäß einem der vorhergehenden Ansprüche, bei dem die Skalierfunktion (300) stückweise linear zwischen den Schwellwerten ($T_{min}$, $T_1$, $T_2$ und $T_{max}$) ist.

**9.** Ein Verfahren gemäß einem der vorhergehenden Ansprüche, bei dem die Skalierfunktion (300) einen oberen Schwellwert ($T_{max}$), einen unteren Schwellwert ($T_{min}$) und mindestens einen Zwischenschwellwert ($T_1$, $T_2$) aufweist.

**10.** Ein Verfahren gemäß Anspruch 9, bei dem Skalierfunktion (300) vier Schwellwerte ($T_{min}$, $T_1$, $T_2$ und $T_{max}$) aufweist.

**11.** Ein Verfahren gemäß einem der vorhergehenden Ansprüche, das den Schritt des Ausschließens mindestens einer Messung eines Parameters von der Auswahl eines extremen Werts dieses Parameters als Reaktion auf eine Betreiberidentifizierung dieser Messung umfaßt.

12. Ein Verfahren gemäß einem der vorhergehenden Ansprüche, bei dem die Schwellwerte ($T_{min}$, $T_1$, $T_2$ und $T_{max}$) unter einer Steuerung eines Betreibers einstellbar sind.

13. Ein Verfahren gemäß einem der vorhergehenden Ansprüche, das den Schritt des Lieferns einer Anzeige jeweiliger Werte eines ausgewählten der Parameter für eine Mehrzahl von jeweiligen Domänen (S1...S14) des Netzwerks als Reaktion auf eine Betreiberauswahl dieses Parameters umfaßt.

14. Ein Verfahren gemäß Anspruch 13, das den Schritt des Lieferns einer Anzeige von mehreren Messungen eines Parameters für eine Domäne des Netzwerks als Reaktion auf eine Betreiberauswahl dieser Domäne umfaßt.

15. Ein Verfahren gemäß einem der vorhergehenden Ansprüche, das den Schritt des Verbindens jedes Wertes, der auf einer jeweiligen Achse aufgetragen ist, mit seinen benachbarten aufgetragenen Werten, um eine polygonale Figur (309) zu definieren, umfaßt.

16. Vorrichtung zum Überwachen mehrerer Messungen jedes von mehreren Parametern, die sich auf den Betriebszustand eines Mehrdomänen-Datenkommunikations-Netzwerks (10) beziehen, die folgende Merkmale aufweist:

   eine Einrichtung zum Empfangen einer jeweiligen Messung jedes der Parameter für jede jeweilige von mehreren Domänen (S1...S14) des Netzwerks; und

   eine Einrichtung zum Auftragen von Werten, die von den Messungen abgeleitet sind, auf jeweiligen einer Vielzahl von Achsen (301 - 306), wobei jede Achse einem jeweiligen Parameter entspricht, und **gekennzeichnet durch**

   eine Einrichtung zum Anwenden, für jeden Parameter, einer Skalierfunktion (300) auf jede Messung dieses Parameters, um einen skalierten Wert desselben als eine Funktion von vorbestimmten Schwellwerten ($T_{min}$, $T_1$, $T_2$ und $T_{max}$) für diesen Parameter abzuleiten, wobei sich die skalierten Werte innerhalb eines vorbestimmten Bereichs befinden, der allen Parametern gemeinsam ist; und

   eine Einrichtung zum Auswählen, für jeden Parameter, eines extremen der skalierten Werte; wobei die Auftragungseinrichtung angeordnet ist, um den ausgewählten skalierten Wert auf der jeweiligen der Vielzahl von Achsen (301 - 306) aufzutragen.

17. Vorrichtung gemäß Anspruch 16, bei der sich die Achsen (301 - 306) radial von einem gemeinsamen Punkt erstrecken.

18. Ein Verfahren gemäß Anspruch 1, das folgende Schritte umfaßt:

   Anzeigen, für jede Achse, mindestens eines Schwellwerts (307, 308), wodurch angezeigt wird, ob der aufgetragene ausgewählte skalierte Wert die Schwelle übersteigt; und

   Ändern eines Anzeigemerkmals (309), das den Achsen (301 - 306) zugeordnet ist, um anzuzeigen, daß eine Schwelle um mindestens einen ausgewählten skalierten Wert überschritten wurde.

19. Ein Verfahren gemäß Anspruch 18, bei dem das Anzeigemerkmal eine Eigenschaft, beispielsweise die Füllfarbe, einer polygonalen Figur (309) aufweist, die durch Verbinden jedes auf einer jeweiligen Achse aufgetragenen Werts mit seinen benachbarten aufgetragenen Werten definiert ist.

**Revendications**

1. Un procédé de contrôle de mesures multiples de chacun de multiples paramètres liés à l'état opérationnel d'un réseau de communications (10) de données à domaines multiples, comprenant les étapes consistant à:

   acquérir, pour chacun des multiples domaines respectifs (S1 ... S14) dudit réseau, une mesure respective de chacun desdits paramètres; et

tracer des valeurs dérivées desdites mesures sur des axes respectifs d'une multiplicité d'axes (301 à 306), chacun desdits axes correspondant à l'un desdits paramètres respectifs,

et **caractérisé par** les étapes consistant à:

pour chaque paramètre, appliquer une fonction (300) de mise à l'échelle à chaque mesure de ce paramètre pour en dériver une valeur mise à l'échelle en fonction de valeurs de seuil prédéterminées ($T_{min}$, $T_1$, $T_2$, $T_{max}$) pour ce paramètre, lesdites valeurs mises à l'échelle étant à l'intérieur d'une plage prédéterminée commune à tous lesdits paramètres;
pour chaque paramètre, sélectionner une valeur extrême desdites valeurs mises à l'échelle; et
tracer ladite valeur sélectionnée mise à l'échelle sur l'axe respectif de ladite multiplicité d'axes (301 à 306).

2. Un procédé selon la revendication 1, dans lequel lesdits axes (301, 306) s'étendent radialement à partir d'un point commun.

3. Un procédé selon la revendication 1 ou la revendication 2, dans lequel lesdits paramètres comprennent au moins une multiplicité sélectionnée parmi les éléments suivants: taux d'erreur de CRC, taux d'erreur d'alignement, utilisation de réseau, utilisation de bloc, un taux de diffusion et un taux de diffusion à destinataires multiples.

4. Un procédé selon la revendication 1, dans lequel lesdits domaines (S1 ... S14) comprennent des segments d'un réseau local (10) de communications informatiques.

5. Un procédé selon la revendication 1, dans lequel lesdits paramètres comprennent des mesures liées aux appels dans un réseau de signalisation de télécommunications.

6. Un procédé selon la revendication 1 ou la revendication 5, dans lequel lesdits paramètres comprennent des charges ou des liaisons de signalisation et/ou des points de signalisation dans un réseau de signalisation de télécommunications.

7. Un procédé selon la revendication 6, dans lequel des mesures liées aux appels sont tracées sur une première multiplicité d'axes, et des charges sur des liaisons de signalisation et/ou des points de signalisation sont tracés simultanément sur une deuxième multiplicité d'axes.

8. Un procédé selon l'une quelconque des revendications précédentes, dans lequel ladite fonction (300) de mise à l'échelle consiste en éléments linéaires entre lesdites valeurs de seuil ($T_{min}$, $T_1$, $T_2$, $T_{max}$).

9. Un procédé selon l'une quelconque des revendications précédentes, dans lequel ladite fonction (300) de mise à l'échelle comprend une valeur de seuil supérieure ($T_{max}$), une valeur de seuil inférieure ($T_{min}$) et au moins une valeur de seuil intermédiaire ($T_1$, $T_2$).

10. Un procédé selon la revendication 9, dans lequel ladite fonction (300) de mise à l'échelle inclut quatre valeurs de seuil ($T_{min}$, $T_1$, $T_2$, $T_{max}$).

11. Un procédé selon l'une quelconque des revendications précédentes, qui inclut l'étape consistant à exclure au moins une mesure d'un paramètre dans ladite sélection d'une valeur extrême de ce paramètre, en réponse à une identification de ladite mesure par l'opérateur.

12. Un procédé selon l'une quelconque des revendications précédentes, dans lequel lesdites valeurs de seuil ($T_{min}$, $T_1$, $T_2$, $T_{max}$) sont réglables sous commande de l'opérateur.

13. Un procédé selon l'une quelconque des revendications précédentes, qui inclut l'étape consistant à réaliser un affichage de valeurs respectives d'un paramètre sélectionné parmi lesdits paramètres pour une série de domaines respectifs (S1, ... S14) dudit réseau en réponse à une sélection de ce paramètre par l'opérateur.

14. Un procédé selon la revendication 13, qui inclut l'étape consistant à établir un affichage de mesures multiples d'un paramètres pour un domaine dudit réseau en réponse à une sélection dudit domaine par l'opérateur.

15. Un procédé selon l'une quelconque des revendications précédentes, qui inclut l'étape consistant à connecter chaque valeur tracée sur l'un desdits axes respectifs à ses valeurs tracées voisines, pour définir une figure polygonale (309).

**16.** Appareil de surveillance de mesures multiples de chaque paramètre d'une multiplicité de paramètres liés à l'état opérationnel d'un réseau de communications (10) de données à domaines multiples, comprenant:

un moyen de réception d'une mesure respective pour chacun desdits paramètres pour chacun desdits domaines multiples respectifs (S1, ... S14) dudit réseau; et
un moyen de traçage de valeurs dérivées desdites mesures sur des axes respectifs d'une multiplicité d'axes (301 à 306), chacun desdits axes correspondant à l'un desdits paramètres respectifs,

et **caractérisé par**

un moyen destiné d'application, pour chaque paramètre, d'une fonction (300) de mise à l'échelle à chaque mesure de ce paramètre pour en dériver une valeur mise à l'échelle en fonction de valeurs de seuil prédéterminées ($T_{min}$, $T_1$, $T_2$, $T_{max}$) pour ce paramètre, lesdites valeurs mises à l'échelle étant à l'intérieur d'une plage prédéterminée commune à tous lesdits paramètres; et
un moyen de sélection, pour chaque paramètre, d'une valeur extrême desdites valeurs mises à l'échelle;
ledit moyen de traçage étant agencé de manière à tracer ladite valeur sélectionnée mise à l'échelle sur l'axe respectif de ladite multiplicité d'axes (301 à 306).

**17.** Appareil selon la revendication 16, dans lequel lesdits axes (301, 306) s'étendent radialement à partir d'un point commun.

**18.** Un procédé selon la revendication 1, qui inclut les étapes consistant à:

indiquer pour chaque axe au moins une valeur de seuil (307, 308) en indiquant ainsi si la valeur sélectionnée tracée mise à l'échelle dépasse ce seuil; et
modifier une particularité (309) d'affichage associée auxdits axes (301 à 306) pour indiquer qu'un seuil a été dépassé par au moins l'une desdites valeurs sélectionnées mises à l'échelle.

**19.** Un procédé selon la revendication 18 dans lequel la particularité d'affichage comprend une propriété, par exemple une couleur de remplissage, d'une figure polygonale (309) définie en connectant chaque valeur tracée sur l'un desdits axes respectifs à ses valeurs tracées voisines.

Fig.1

EP 0 598 484 B1

Fig.2a

R ——→ Acquire measurements of
operating parameters
(frame count, byte count,
broadcast rate, multicast rate,
CRC error count,
alignment error count)
for each network segment
S1 to Sn — 100

↓

Assemble parameter
measurements and
configuration data
(bandwidth, network type)
for each network segment — 102

↓

Set $x=1$ — 104

↓

Select network segment S$x$ — 106

↓

Derive utilization
= byte count * 8 / bandwidth — 108

↓

Derive CRC error rate
= CRC errors per frame — 110

↓

Derive alignment error rate
= alignment errors per frame — 112

↓

Derive frame utilization
= frame count/segment max. — 114

↓

$x=x+1$ — 116

↓

No ←— All segments
considered?
($x>n$?) — 118

↓ Yes

Fig.2b

Retrieve current settings of scaling thresholds $T_{min}, T_1, T_2, T_{max}$ for each parameter — 120

A

Set $x=1$ — 122

Select network segment S$x$ — 124

Scale utilization — 126

Scale CRC error rate — 128

Scale alignment error rate — 130

Scale frame utilization — 132

Scale broadcast rate — 134

Scale multicast rate — 136

$x=x+1$ — 138

All segments considered? ($x>n$?) — 140

No

Yes

Select a parameter — 142

16

Fig.2c

144 — Sort scaled values of
selected parameter
for all segments S1 to S*n*

146 — All parameters
sorted? —No→ Select next
parameter
148

↓Yes

B → Select a parameter — 150

152 — Choose maximum scaled
value of the parameter

154 — Is
chosen value
masked? —Yes→ Choose next
highest scaled
value of the
parameter
156

↓No

158 — Plot chosen value on
spider diagram axis for
selected parameter

Select next
parameter
162

No← All parameters
plotted?
160

↓Yes

Complete spider diagram — 164

Fig.2*d*

```
              ↓
┌─────────────────────────────────────────┐
│          Obtain user choice:             │
├·········································┤
│   None    ┆  Thresholds  ┆  Parameter   │──── 166
└───────────────────────────────────────┘
     │            │              │
     │            ↓              │
   ┌───┐   ┌──────────────────┐  │
   │ R │◄──│  Input user's choice │
   └───┘   │   of threshold(s)   │──── 168
           └──────────────────┘
   ┌───┐        │
   │ A │◄───────┘
   └───┘

         ┌───────────────────────────────┐
         │  Display horizontal bar chart   │
         │   of values of chosen           │
         │   parameter for all segments    │──── 170
         └───────────────────────────────┘
                     │
         ┌───────────────────────────────┐
         │        Obtain user choice:      │
         ├···············································┤
         │  Mask value   ┆  Segment name  │──── 172
         └───────────────────────────────┘
              │                │
         ┌───────────────────────────────┐
         │   Store identity of segment     │
         │   and displayed parameter       │──── 174
         └───────────────────────────────┘
   ┌───┐      │
   │ B │◄─────┘
   └───┘
                                     │
         ┌───────────────────────────────┐
         │    Present detailed data for    │
         │     chosen segment and          │
         │     displayed parameter         │──── 176
         └───────────────────────────────┘
                     │
┌────────────────────────────────────────────────────┐
│                Obtain user choice:                   │
├····················································┤
│ Exit ┆ Utilization ┆ Frame utiliz'n ┆ Other rates   │──── 178
└────────────────────────────────────────────────────┘
     │       │              │              │
   ┌───┐  ┌────────────────────────────────┐
   │ R │  │     Display selected data       │──── 180
   └───┘  └────────────────────────────────┘
```

# Fig.3

Value V > $T_{min}$?  — 200

No → Scaled value =0 — 202

Yes

Value V > $T_1$? — 204

No → Scaled value = $\dfrac{V-T_{min}}{T_1-T_{min}}$ — 206

Yes

Value V > $T_2$? — 208

No → Scaled value = $1 + \dfrac{V-T_1}{T_2-T_1}$ — 210

Yes

Value V > $T_{max}$? — 212

No → Scaled value = $2 + \dfrac{V-T_2}{T_{max}-T_2}$ — 214

Yes

Scaled value = 3 — 216

Fig.4

Scaled
parameter

3

2

1

0

$T_{min}$  $T_1$  $T_2$  $T_{max}$

300

Measured parameter

301

Utilization

CRC error rate

302

309

308

306

307

Frame
utilization

Alignment
error rate

303

304

305

Broadcast rate

Multicast rate

Fig.5

EP 0 598 484 B1

Fig.6

Fig.7

21